Europäisches Patentamt

European Patent Office

Office européen des brevets

(11) Publication number: **0 178 064**
A2

# (12) EUROPEAN PATENT APPLICATION

(21) Application number: **85306212.3**

(22) Date of filing: **02.09.85**

(51) Int. Cl.⁴: **F 16 J 15/02,** E 06 B 7/22, B 60 R 13/06

(30) Priority: **04.09.84 GB 8422322**

(43) Date of publication of application: **16.04.86 Bulletin 86/16**

(84) Designated Contracting States: **BE DE FR GB IT SE**

(71) Applicant: **SCHLEGEL (UK) HOLDINGS LIMITED, Ring Road, Seacroft Leeds, LS14 1LY (GB)**

(72) Inventor: **Cook, John Edward, 16c The Oval, Harrogate Yorkshire HG2 9BX (GB)**

(74) Representative: **Carpmael, John William Maurice et al, CARPMAELS & RANSFORD 43 Bloomsbury Square, London, WC1A 2RA (GB)**

(54) **Polymer seals.**

(57) A seal which incorporates means therein to control the collapse characteristics of the seal. The seal may be extruded, in which case at least a part of an extruded wall of the seal incorporates one or more corrugations therein for controlling the characteristics of the seal. Preferably, several corrugations are provided and the corrugations are formed of a different, e.g. softer, material from the remainder of the seal. The seal may incorporate further means such as inserts to control its characteristics. Where the seal incorporates a hollow sealing portion one or more internal webs may be provided within the hollow sealing portion to control the collapse characteristics of that portion and these webs may themselves incorporate corrugations. Although specifically designed for incorporation in motor vehicle door seals, the present invention can also be incorporated in highway seals, seals for doors and windows and many other types of seals such as those which incorporate bristle strips. Instead of the corrugations, the means controlling the collapse characteristics may comprise said inserts, and/or said webs. The invention is also applicable to moulded seals.

ACTORUM AG

-1-

## POLYMER SEALS

This invention relates to polymeric seals. Such seals are normally manufactured in a single process operation which is normally an extrusion operation, although in certain instances, the seals could be formed by injection moulding. When extruding such seals, normally at least two polymeric materials would be used and extruded simultaneously through the extruder die head. By using different polymer materials having different properties, for example hardness, colour or quality, the characteristics of the seal can be controlled. Although the invention is particularly aimed at thermoplastic elastomer seals, it should be appreciated that the invention is not limited to such seals, and could apply to seals formed of thermosetting or vulcanised elastomer materials or more rigid polymer materials, and/or to seals incorporating non-polymeric materials such as metallic wire or slotted metal carriers or cords of material for controlling shrinkage and creep in the finished seals. Such materials, as is well known, may be passed through the extrusion die and surrounded by the extrudate.

Seals made in accordance with the present invention can have a plurality of uses, e.g. in the motor and in the building and construction industries. In the motor industry, the seals are particularly useful as combination edge trims and door seals or draught excluders and they can also be used as boot seals, windscreen locating strips, window channelling and the like. In the building industry, the seals are particularly useful as perimeter seals for doors and windows and in the construction industry they are particularly useful as weatherbars or water seals in roadways, pavements and the like. It will be appreciated, however, that the seals of the invention can be used for many other purposes, such as, for example, in office machinery, large industrial processes, etc.

Most motor cars incorporate around their various door openings a combined edge trim and door seal, the edge trim acting as a finishing strip which overlies and protects the flange defining the door opening and which also acts as an anchoring device for the door seal, i.e. the resiliently deformable part against which the door is shut and which prevents ingress of air and water to the interior of the car. The flanges around door openings in motor cars are often of variable thickness, partly because of the spot welding which occurs in such flanges to join various body panels together and also because the flange can sometimes be made up of only one thickness of metal whereas in other instances it could be formed of at least three thicknesses welded together. The edge trim portion of the combined door seal and edge trim has to be able to be easily attachable to such flanges and yet, once attached, it should only be removable with extreme difficulty. At the same time, the edge trim portion should form a satisfactory seal with the flange so as to prevent ingress of moisture around the flange and, furthermore, the edge trim portion should sit snugly against the outer edge of the flange so as to keep door-shut pressures to a minimum. Normally, such edge trim portions are of generally U-shaped cross-section and are formed of a polymeric material having a plurality of gripper fins on the inner faces of the arms of the U to hold the edge trim on the flange. In order to provide the necessary gripping force in the arms of the U and yet allow the edge trim to remain flexible, so that it can follow the contours of the door opening, a metallic carrier formed either of slotted metal or knitted wire is usually incorporated within the body of the U and surrounded by polymeric material.

Traditionally, such edge trims are made of one or more polymeric, e.g. thermoplastics, materials extruded in a single extruding operation often with

-3-

the gripper fins being formed of a softer material than the remainder of the body of the U.

The door seal portion of the combined edge trim and door seal has traditionally been formed of a vulcanised material, e.g. a certain foamed rubber, and because such materials are not compatible with the theromoplastic materials of the edge trim portion they have traditionally been formed by a separate extruding and vulcanising process and then adhered to an outer face of the edge trim portion in a combining stage. This combining stage adds considerably to the cost of producing such edge trims and door seals and, furthermore, such constructions have the added disadvantage that where a sharp corner has to be formed in the door seal portion, two lengths of door seal have to be mitred and adhered or vulcanised together, again increasing the cost of the product.

It is an important requirement of motor car door seals that they have good compression set characteristics and load deflection characteristics. In other words, when the seal is partly collapsed on closing of the vehicle door, which is obviously necessary to perform a satisfactory seal around the whole door, it is important that this can be achieved without undue effort which would otherwise increase what is known as the door-shut pressure. In other words, the load deflection figure should not be too high. On the other hand, it is important if, for example, the door remains closed for several months, that when the door is opened again the seal will quickly spring back to its original shape and not take a permanent compression set. Many foamed rubbers have the required properties but in the past it has been almost impossible to achieve both good compression set and load deflection figures with thermoplastic elastomer materials. This is largely because to keep the load deflection figure low it has been necessary to have a very thin wall

-4-

for the seal, but this has then resulted in the seal having very poor compression set characteristics, i.e. the seal wall remains permanently deflected and does not recover its original shape. The present invention allows this problem to be solved and makes it possible to make seals with good compression set and load deflection characteristics by using thin walled sections.

Normally, the solution involves extruding a new type of seal, but in certain instances, the seal, or at least a part of it, is formed by a moulding process, e.g. a Duplex injection moulding process.

According to the present invention, we provide a polymer seal wherein means is incorporated in the seal to control the collapse characteristics of the seal. Said means may comprise a corrugation in a wall or extending from a wall of the seal, or it may comprise a cord of material incorporated in a wall of the seal.

Normally, the seal would be formed by an extrusion process, but it may be formed by an injection moulding process.

The seal may be an extruded elastomer seal wherein at least a part of an extruded wall of the seal incorporates a corrugation therein formed during extrusion of the seal to control the collapse characteristics of the seal.

If desired, at least a part of a seal wall may have a sinuous cross-sectional shape so as to look like the wall of a concertina. The concertina shaped portion may be provided with a plurality of corrugations and where the two walls of a corrugation hinge or collapse relative to each other, the wall may be formed of a different, e.g. softer, material from the remainder of the wall. Alternatively, in this region, the wall may merely be thinned down. At the hinge or collapse point, a cord of a different material may be encapsulated by the polymeric, e.g.

0178064

elastomer material. Alternatively, one or more parts of the wall may be formed totally of a softer polymeric material than the remainder of the wall or a harder material, so as to control the wall collapse as desired.

If desired, further means may be incorporated in the seal to assist in control of its collapse characteristics. The further means may be formed by parts of the wall having inserts therein which may be formed of polymeric or non-polymeric material such as, for example, strips of wire, or spring steel or textile material.

In other words, the means to control the characteristics of the seal may be the corrugations, or the cords or inserts, or a combination of both.

Alternatively, or additionally, one or more webs of material, which webs may be formed of thermoplastic elastomer material and which are extruded or moulded integrally with the seal wall, is/are connected to one or more faces of the wall so as to act in compression or tension to control the collapse characteristics of the wall. In the case of a generally hollow tubular seal wall as used in a combined edge trim and door seal, one or a plurality of webs may extend internally of the seal between opposed areas of the wall and these webs themselves may incorporate concertina shaped sections and/or be formed of a combination of thermoplastic elastomer materials having different properties, e.g. one material which is harder or softer than the other. Furthermore, such webs could be connected together so as to radiate out from a floating centre which could itself be tubular. Instead of radiating out from the floating centre, one or more of the webs could be tangentially connected thereto so as to assist in creating a bending motion on the seal wall to control collapse.

The seal may comprise a sealing portion and a fixing portion extruded integrally therewith.

-6-

The seal may comprise a sealing portion and a fixing portion extruded integrally therewith.

In one construction, the sealing portion forms part of a combined door seal and edge trim for a motor vehicle with the edge trim providing the fixing portion. In this construction, the edge trim is normally of generally U-shaped cross-section, the body of the U may be formed of a low specification thermoplastic elastomer material having a covering of a better grade of thermoplastic elastomer material extruded integrally therewith, and with the seal portion which may be the same material as the covering portion. The edge trim portion may be provided with a plurality of gripper fins extending inwardly from the inner faces of the arms of the U which may be formed of the same or different materials as the covering portion or by a combination of different materials, for example some of the fins may be hard and others may be softer and if desired, the hard fins may have a softer gripping surface.

Preferably, the lower specification material forming the U-shaped body of the edge trim portion is extruded around a metallic carrier which may be formed of our well-known knitted wire or of a slotted metal strip or its equivalent.

In an alternative construction, the sealing portion may be for use in a window or door, and have a serated fixing portion of hard material, with an optional projecting softer securing strip integral therewith, and a bulbous sealing portion upstanding from a limb of the fixing portion, and incorporating said or a plurality of corrugations, or said insert(s).

Alternatively, the bulbous sealing portion may be replaced with a sealing strip formed of pile material or other sealing material and this would then be connected to the fixing portion with a web of material incorporating said corrugation or a plurality of corrugations, or said insert(s).

In another construction, the seal may comprise a fixing portion of hard material, a sealing portion made of a strip of bristles and a web of material incorporating said corrugation (or a plurality of corrugations) connecting a resinous bead holding together the bristles in the strip to the fixing portion.

In a yet further construction, for use as a highway seal, the seal may comprise a body portion comprising a substrate of low specification elastomer material surrounding a carrier, which may be formed of knitted wire, with a covering skin enveloping the substrate, there being a plurality of gripping flanges extending outwardly from the skin, and which may be formed of the same elastomeric material as the skin, and in at least one, and preferably all, of which the said corrugation is formed, or said insert(s) is/are located. This seal may have a cross piece at its top side, and further cords of material may be provided in the flanges and/or in the cross piece.

Several embodiments of the present invention are now described by way of example only with reference to the accompanying drawings, in which:-

FIGURE 1 is a cross-section through a combined edge trim and door seal for a motor vehicle;

FIGURE 2 is a scrap view showing an alternative construction of part of the seal portion in Figure 1;

FIGURES 3a - 3d are further scrap views showing further alternative constructions;

FIGURE 4 is a view similar to Figure 1 showing a yet further construction;

FIGURE 5 is a view similar to Figure 2 showing a modification of the construction in Figure 4;

FIGURE 6 is a perspective view of a short length of the product shown in Figure 1;

FIGURE 7 is a view similar to Figure 1 but to a smaller scale and with part broken away showing a further embodiment of the invention;

FIGURE 8 is a view similar to Figure 7 of a yet further embodiment of the invention;

FIGURES 9a and 9b are scrap views showing two alternative constructions for a portion of the seal shown in Figures 7 or 8;

FIGURE 9c is a scrap view showing a further portion of the seal shown in Figure 7, and

FIGURES 10-13 are views similar to Figure 1, showing four further embodiments of seal for use in fenestration and the building and construction industry.

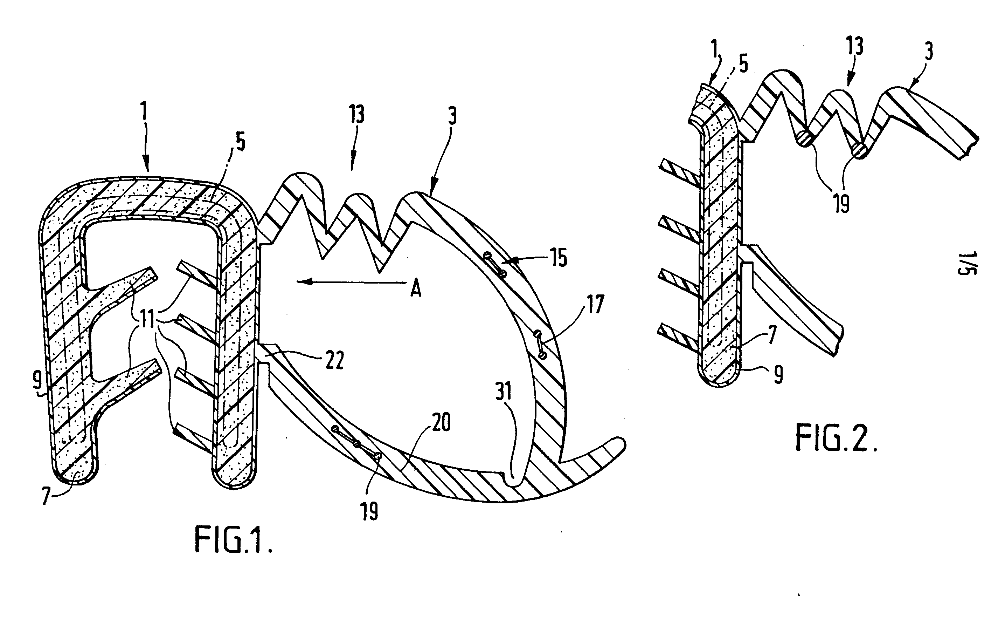

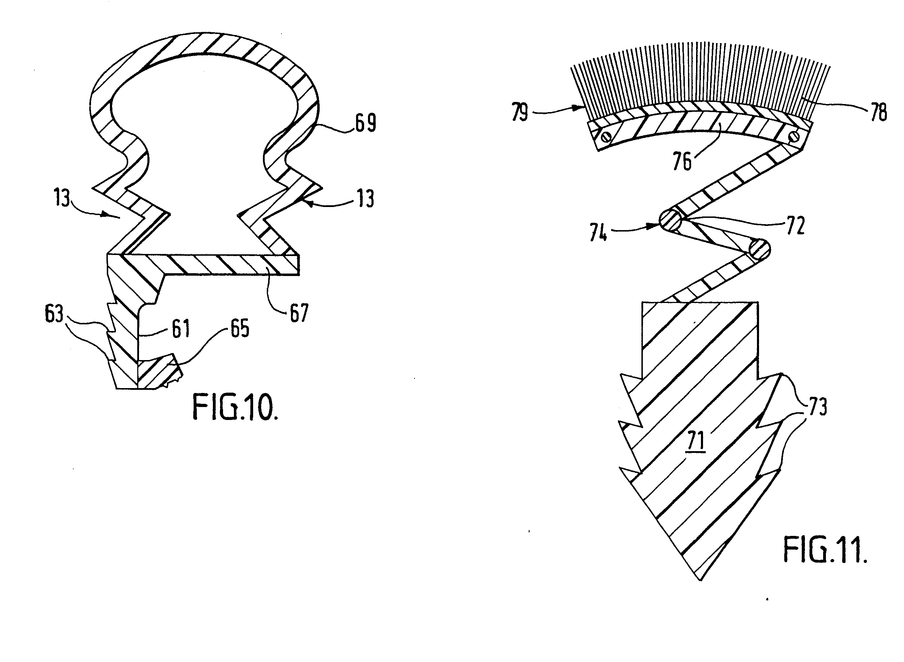

Figures 1-9c of the above drawings relate to different constructions of seal as used in a combined edge trim and door seal for a motor vehicle but the present invention is not limited to such seals. The seals of the present invention can be used wherever it is desired to make a seal between two members and they are also particularly useful in the building and construction industries, as illustrated in Figures 10-13.

In the various Figures of the drawings, like parts are identified with the same reference numerals throughout.

Referring to Figure 1, the combined edge trim and door seal shown therein has an edge trim portion 1 integrally connected to a door seal portion 3, the two portions being extruded in a single extrusion operation using a plurality of different extrudates which are forced through a single extrusion die together with a knitted wire carrier 5 located centrally within the edge trim portion 1. As illustrated, the edge trim portion 1 has a body of generally U-shaped cross-section which is formed of a relatively inexpensive low specification foamed thermoplastic elastomer material 7 which surrounds the carrier 5 and is itself surrounded by a higher specification thermoplastic elastomer material skin 9. As is well known in the art, the edge trim 1 has a plurality of gripper fins 11 extending inwardly from the inner faces of its arms and although this is not essential, the gripper fins on one arm are smaller than those on the other. The gripper fins may be formed of the same material as the skin 9 or alternatively of the body material 7 with a different material on their gripping surface. Alternatively, the gripper fins could be made of a completely different thermoplastic elastomer material designed specifically to give good grip on a flange to which the edge trim is to be fitted and yet will allow easy fitting, and they really form no part of the present invention.

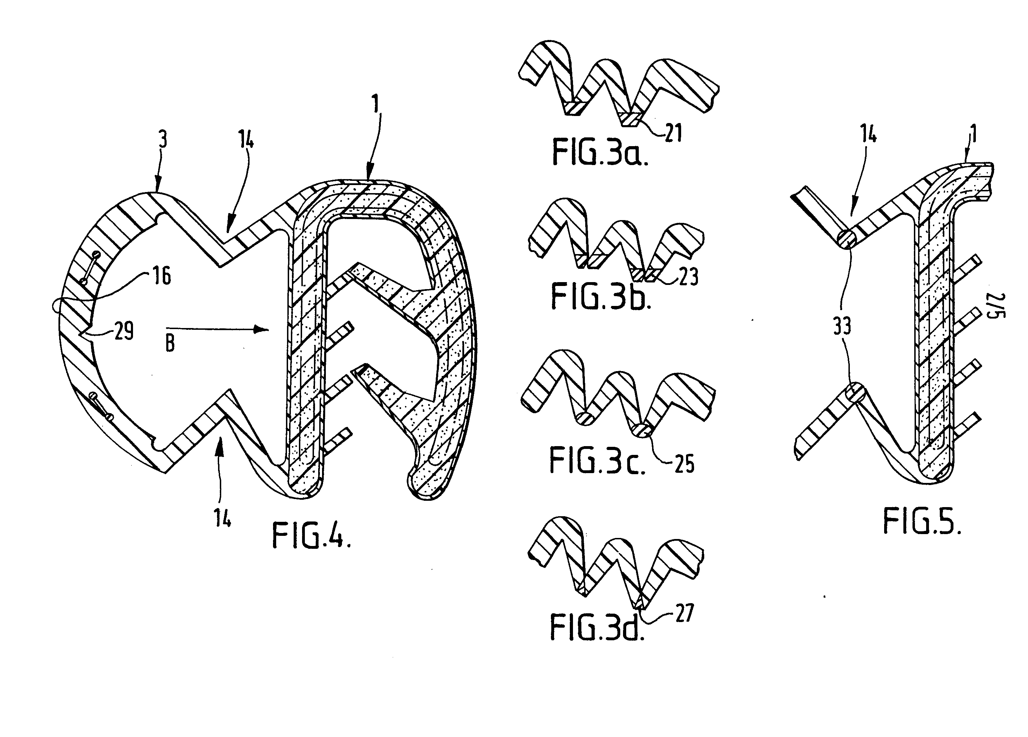

As shown, the door seal portion 3 is formed of the same thermoplastic elastomer material as the skin 9 and the precise shape of the seal 3 can be designed as required (see also Figure 4). It is not essential, however, that the seal portion 3 be of the same material as the skin 9 although it would be extruded in one with the edge trim portion 1. The seal portion 3 is generally hollow and in order to control its collapse characteristics, it is provided with a sinuous wall portion 13 which, as shown, has two corrugations of generally V-shaped configuration which allow easy collapse of the seal portion in the general direction of arrow A. Furthermore, due to the resilient nature of the elastomer from which the corrugations are made they will tend to cause the seal portion to regain its original shape once a vehicle door, which was previously in sealing abutment with it, is opened.

As illustrated, the wall of the seal portion 3 is formed at the locations 15, 17 and 19 with further means for controlling the collapse characteristics of the seal. These are shown as inserts in the wall which may take the form of a different elastomer material from that forming the major portion of the wall, e.g. it may be harder or softer, or they may be comprised of cords or tapes or strips of other polymeric or non-polymeric material. It is envisaged, for example, that textile cords could be used or a knitted wire

-10-

carrier or a textile ribbon or even a length of wire or strip of spring steel could be used. It is also envisaged that the inserts could replace the corrugations, or vice versa.

In the construction shown in Figure 2, the corrugated wall portion 13 of the seal portion 3 which of course has a concertina-like configuration, is modified so that at the apices 19 of the two corrugations the wall of the seal portion is formed from a different material from the remainder of the corrugations. This material may be such as to assist with the hinge effect at each apex 19 in which case it would probably be softer than the remainder of the wall of the seal portion 3 or, alternatively, a harder material could be used if it was desired to stiffen up the hinge points. In Figure 2 the apices are illustrated as being formed by round beads of the different material but in Figures 3a-3d these apices are shown as being parallelogram shaped (21), or irregularly shaped with a substantially pinpoint hinge 23, oval 25 and generally triangular 27, respectively.

In the modified construction shown in Figure 4, the edge trim portion 1 differs from that shown in Figure 1 in its overall cross-sectional shape and the cross-sectional shapes and constructions shown in Figures 1 and 4 are merely illustrative and nonlimiting. The integral seal portion 3 is again of generally hollow tubular construction but instead of having the corrugated wall portion 13 in the form of a concertina with two corrugations, a single corrugation 14 is provided both in an upper portion and in a lower portion (which are approximately opposed to each other) of the seal portion. The apex of each corrugation thus ensures that when a door is closed against the seal portion 3, e.g. in the vicinity of a wall portion 16, the seal portion 3 will collapse generally uniformly in the direction of the arrow B. In the construction shown in Figure 1, collapse of the seal portion 3 in

-11-

the direction of the arrow A will tned to cause a lower wall portion 20 of the seal portion to pivot anti-clockwise about its point of connection 22 to the edge of the portion 21.

In the construction shown in Figure 4, a line of weakness 29 is formed on the inner face of the wall of the seal portion 3 opposite the edge trim portion 1 which also has a controlling effect on the collapse characteristics of the seal.

A similar line of weakness 31 is provided, in the construction illustrated in Figure 1.

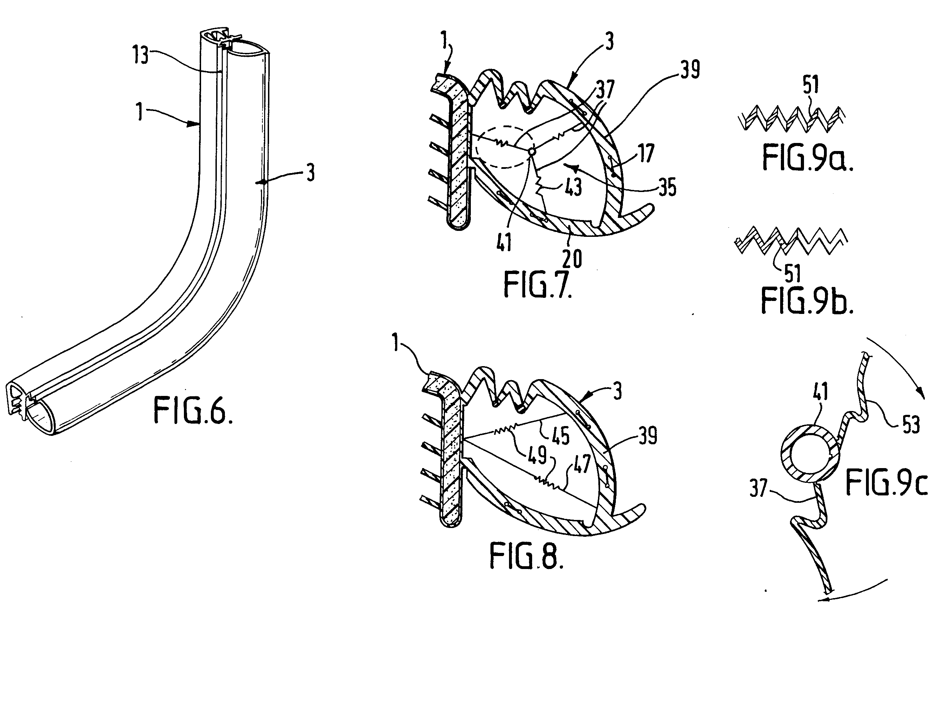

The construction shown in Figure 4 can be modified as shown in Figure 5 by making the apex 33 of each corrugation from a different material from the remainder of the wall of the seal portion 3, as was the case with the apices 19 in the Figure 2 construction. The properties of these apices 33 will of course have a controlling effect on the collapsibility of the seal portion 3. Likewise, the corrugation 14 could be replaced by a normal wall having an insert therein, or could be supplemented by an insert in the wall 16.

Referring to Figure 7, the seal portion 3 illustrated therein is similar to that shown in Figure 2 but further means 35 is provided within the seal portion 3 to control its collapse characteristics. As illustrated, the means 35 comprises three webs 37, one of which is connected to an arm of the edge trim portion 1, another of which is connected to an upper wall portion 39 of the seal portion 3, and the third of which is connected to the lower wall portion 20. The three webs 37 are connected to each other by means of a small tubular floating centre 41 located in the middle of the seal portion 3 and are shown as radiating out from the floating centre 41 approximately at 120° circumferential intervals. Each web 37 has a central corrugated region 43 and each of the webs is formed of thin thermoplastic elastomer material

-12-

extruded with the remainder of the seal portion 3.

In the modified construction shown in Figure 8, two different webs 45 and 47 are provided internally of the seal portion 3, one end of each web 45 and 47 being connected to an arm of the edge trim portion 1 and the opposite ends of the webs 45 being connected to the wall portion 39 at spaced locations on its inner periphery, which locations are dictated by the required collapse characteristics of the seal portion 3. As shown, each web 47 has a central multi-corrugated region 49. In this construction, the corrugations in the main wall of the seal portion 3 could be replaced by a normal seal wall incorporating one or more inserts.

Referring now to Figure 9a, this illustrates a possible construction of the corrugated region 43 or 49 of the webs 37, 45 and 47 shown in Figures 7 and 8. An alternative construction is shown in Figure 9b and the cross-hatched areas 51 represent regions of the corrugations which are formed of a harder material than the remainder of the corrugations. Obviously, these hard and soft regions can be chosen to suit the controlling influence of each web on the collapse characteristics of its integral seal portion 3.

In the construction shown in Figure 7, the three webs 37 extend radially outwards from the centrally located floating centre 41, largely as represented by the web 37 shown in Figure 9c. As an alternative to this, however, it may be desirable for example, so as to obtain a bending motion during collapse of a seal portion 3 during compression, to arrange for the web to be connected generally tangentially to the floating centre 41 along the lines of the web 53 illustrated in Figure 9c.

In all the above described constructions, various means have been described for controlling the collapse characteristics of the seal portion 3. Such means can be provided either by using a selection of different materials in various component parts of the seal portion
or by controlling the collapse of the seal portion
by the provision of the internal or external webs or,
alternatively, by locating within the thermoplastic
elastomer material other polymeric or non-polymeric
parts.  These parts may be for example polypropylene,
a shore 93°A Santoprene, a polyester monofil, a nylon
monofil or a steel mat or strip, to name but a few
examples.  It should be appreciated that various
combinations of these means are also possible.

In the past it has always been considered
quite impractical to form the seal portion 3 or a combined
edge trim and door seal of a thermoplastic material
because such materials either have not had the correct
compression set and load deflection characteristics
or, alternatively, such characteristics have only been
achievable by using large quantities of material at
considerable expense.  We have now found, however,
that by incorporating in the seal during the extrusion
operation or by attaching to the seal during the extrusion
operation suitable means which control the collapse
characteristics of the seal, then thin wall seals can
be used which meet the necessary requirements.  Of
course, the thin walls could alternatively be formed
of a thermosetting or vulcanisable material, or other
polymeric material.

Furthermore, by being able to control the
collapse characteristics of the seal portion 3 we find
we are able to overcome problems normally associated
with door seals such as wrinkling when the seal is
used on a sharp bend, corner collapse or roll, or the
like.

In the case of combined edge trims and door
seals in accordance with the invention and which are
made entirely of a thermoplastic elastomer material,
it is now simple to form mitre joints for sharp corners
since these joints can normally be heat sealed.  Furthermore, the edge trim portion of the product can be formed

-14-

relatively cheaply by using a very thin skin 9 of high grade material on the outside of the edge trim portion but a lower specification material on the inside forming the majority of the U-shaped body. This material can of course be foamed. Even the material forming the seal portion 3 can be foamed if desired, and instead of being hollow as shown, for example, in Figure 1, it could be foam filled again with a cheap elastomer material which itself could control the collapse characteristics of the seal portion. In fact, by using a foam material of low grade for the main body portion 7 of the edge trim portion 1 it has been found that when an integral carrier 5 is also used, the tendency for the pattern of the carrier to appear through the outer skin 9 of the trim 1 is reduced.

Referring now to Figure 10, an alternative type of seal for use in a door or window is shown. The seal has a fixing portion 61 formed of a hard elastomer material provided with serrations 63 on one face, and on an opposite face with an integral securing strip 65 of a softer elastomer material. At its upper end, the fixing portion 61 has a laterally projecting limb 67 from which a bulbous sealing portion 69 projects. Two corrugations 13 are provided on each side of the portion 69 to improve its collapse characteristics, and as in the previous constructions, these corrugations may be formed in any one of a plurality of different ways. Likewise, the remainder of the wall of the portion 69 may be of composite construction.

The seal shown in Figure 11 is a window or door seal, and has a fixing portion 71 of hard elastomer material which is pushed into a groove and held in position by serrations 73, and a sealing portion 79. Portion 79 has a sealing surface formed of pile material 78 on a backing layer 76, and this is connected to portion 71 by a web 74 which is of a sinuous cross-section and extends between one edge of layer 76 and a top face of portion 71. The web 74 is thus of a

-15-

corrugated construction, and at the apex of each corrugation a polymeric or non-polymeric stress point 72 is provided. These can strengthen or weaken the web at these points, and/or can provide hinge points. The construction of stress points 72 can be as in the previous embodiments.

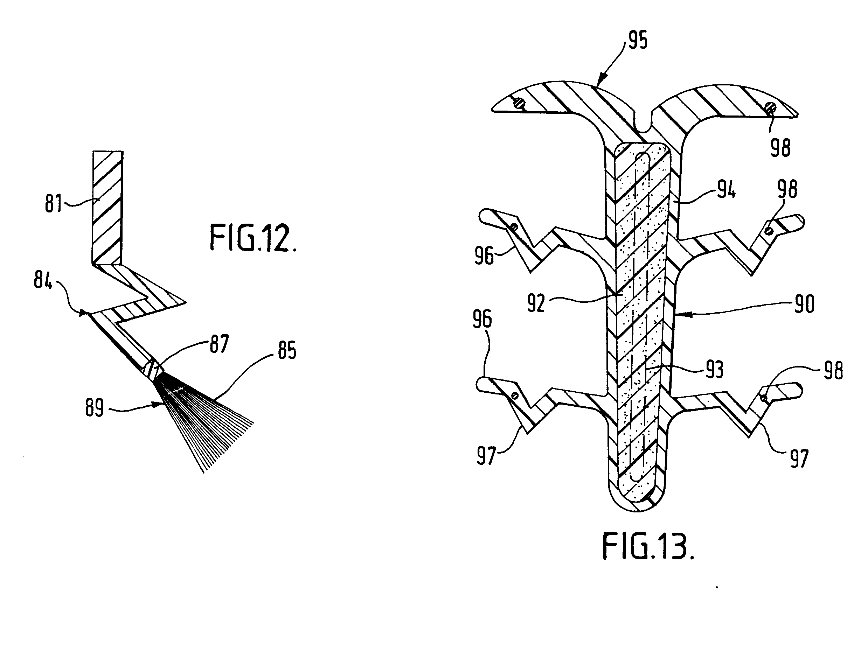

An industrial door seal is illustrated in Figure 12, and comprises a fixing strip of hard elastomer material 81, with a strip of bristle material 85 providing a sealing portion 89. The bristles are held together by an elastomer bead 87 extending along one edge of the bristle strip, and the strip 85 is connected to the strip 81 by a sinuous web 84 having two corrugations therein. These corrugations can be of composite construction, as with the other embodiments of the invention.

Referring now to Figure 13, a highway seal is shown. This comprises a body portion having an elastomer substrate 92, e.g. of an inexpensive foam material surrounding a carrier 93 such as our well known knitted wire carrier. The substrate 92 is surrounded by a covering skin 94 having the required properties of the seal, and at its upper edge the seal has a cross piece 95 which overlies the groove in a highway into which the body portion 90 is inserted. To hold the body portion 90 in position, a plurality of laterally extending gripper flanges 96 is provided on each lateral face of the body portion, and a corrugation 97 is formed in each flange, so that they collapse easily. These may, as in the other embodiments of the invention, be of composite construction. Also included in the seal are a plurality of cords of material 98. These may be of the same or different materials, and are provided, as in previous embodiments, to change or control the collapse characteristics of parts of the seal. As previously, this may be formed of wire, or a differnt polymer material or one of the other materials previously described herein. Likewise, the cords 98 could be used to the exclusion of the corrugations 97, and vice versa.

0178064

In all the above described seal constructions, it should be appreciated that the seals are formed of any polymeric material (or combination of materials) which enable the seal to be extruded. However, it is often desirable to form the seals largely of thermoplastic elastomer materials. This has the advantage that different coloured thermoplastic elastomer materials can be used for different parts of the seal, for example to match interior trim colours within a vehicle and/or to match exterior paintwork.

Another advantage of using thermoplastic elastomer materials is that they are easier to extrude than the more traditional rubber seals which are normally thermosetting and require vulcanising. In the past it has always been felt necessary to make the seals of a material which inherently possesses the necessary compression set and load deflection characteristics. However, by providing means to control the collapse characteristics in a thermoplastic elastomer seal, equivalent performances can be achieved and such means can be provided during the extrusion operation because thermoplastic elastomer materials can be extruded down to the finest detail. Rubber and other thermo-setting materials are more difficult to control dimensionally because of the need for a curing operation subsequent to the extrusion.

In the above constructions, the inserts, such as corrugations and webs, either alone or in combination, have been described as controlling the collapse characteristics of the seal. It should be appreciated that not only do they control collapse when abutted, e.g. by a car door or door jamb, but furthermore, they assist in maintaining the cross-sectional shape of the seal, for example, when it is fitted so as to extend around a bend. For example, with known combination car door seals/edge trims, there is always a tendency for the seal portion, once the edge trim has been fitted to an internal or external corner, to "cut" the corner. The inserts help to prevent this.

It will of course be understood that the present invention has been described above purely by way of example and modifications of detail can be made within the scope and spirit of the invention. For example, the seal need not be round or tubular and could comprise a leaf seal in which case the means controlling the collapse characteristics of the seal could be external of the seal.

It is also envisaged, for example, that a major part of the extrudate could be formed using a polymer with average properties, whereas the corrugated part of the seal, or at least its hinge points, would be formed of another polymer having excellent hinge properties. For example, the seal could be all elastomeric, with the major part being formed of cellular EPDM and the hinge points being formed of a high quality dense EPDM. Alternatively, the seal could be formed partly of a thermoplastic material and partly of a thermoplastic elastomer, e.g. with the major part being formed of an olefinic thermoplastic elastomer such as an EPDM modified olefin with polypropylene hinge points. Furthermore, other polymeric materials may be used.

In the specific description with reference to the drawings, extruded seals have been described. For certain uses, and when extruded seals have to negotiate very sharp bends, extruded seals cannot be used, at least at the bend. The normal procedure for sharp bends, for example, is to cut out a part of the extruded seal and replace it with a moulded section. Accordingly, the present invention is not limited to extruded seals, but also extends to moulded seals, e.g. Duplex injection moulded seals. Such seals may, as with the extruded seals, be formed with inserts, and/or with corrugations and/or webs to control their collapse characteristics.

CLAIMS:

1. A polymer seal wherein means is incorporated in the seal to control the collapse characteristic of the seal.

2. A seal according to claim 1 wherein said means comprises a corrugation in a wall or extending from a wall of the seal.

3. A seal according to claim 1 wherein said means comprises a cord of material incorporated in a wall of the seal.

4. A seal according to claim 1, 2 or 3 which is formed either by an extrusion process or by an injection moulding process.

5. A seal according to claim 2 wherein at least a part of an extruded wall of the seal incorporates a corrugation therein which is formed during extrusion of the seal and controls the characteristics of the seal.

6. A seal according to claim 5 wherein the extruded wall is provided with a plurality of corrugations.

7. A seal according to claim 5 or 6 wherein, where the two walls of a corrugation hinge or collapse relative to each other, the wall is formed of a different elastomer material from the remainder of the wall.

8. A seal according to claim 5 or 6 wherein, where the two walls of a corrugation hinge or collapse relative to each other, the wall is thinned down.

9. A seal according to claim 5 or 6 wherein, at a hinge or collapse point of the corrugation(s), a cord of a different material is encapsulated by the polymeric material.

10. A seal according to claim 2 wherein further means is incorporated in the seal to assist in control of its collapse characteristics.

11. A seal according to claim 10 wherein the further means is formed by parts of the wall having at least one insert therein.

0178064

12. A seal according to any one of the preceding claims wherein one or more webs of material, which are formed integrally with the seal wall, is/are connected to one or more faces of the wall so as to act in compression or tension to control the collapse characteristics of the wall.

13. A seal according to claim 12 which has a generally hollow tubular seal wall and wherein at least one web extends internally of the seal between opposed areas of the wall.

14. A seal according to claim 13 wherein said web incorporates a concertina shaped section.

15. A seal according to claim 13 or 14 wherein the web is formed of a combination of elastomer materials having different properties.

16. A seal according to claim 13, 14 or 15 including a plurality of internal webs.

17. A seal according to claim 16 wherein said webs are connected together so as to radiate out from a floating centre.

18. A seal according to claim 16 wherein said webs are tangentially connected to a floating centre so as to assist in creating a bending motion on the seal wall ot control collapse.

19. A seal according to any one of the preceding claims which comprises a sealing portion and a fixing portion integral therewith.

FIG.1.

FIG.2.

FIG.3a.

21

FIG.3b.

23

FIG.3c.

25

FIG.3d.

27

3  14  1

16

29

B

14

FIG.4.

14  1

33

2/5

FIG.5.

0178064

FIG.6.

FIG.7.

FIG.8.

FIG.9a.

FIG.9b.

FIG.9c.

3/5

0178064

69

13

13

63

61

65

67

**FIG.10.**

79

78

76

74

72

73

71

**FIG.11.**

4/5

0178064

FIG.12.

81

84

87

85

89

FIG.13.

95

98

94

98

96

92

90

96

93

98

97

97

0178064